# EUROPÄISCHE PATENTANMELDUNG

(11) **EP 0 744 644 A1**
(43) Veröffentlichungstag der Anmeldung: **27.11.1996**
(21) Anmeldenummer: 95810340.0
(22) Anmeldetag: 23.05.1995
(51) Int. Cl.: G02B 27/22

(54) **Vorrichtung zur stereoskopischen Betrachtung**

(71) Anmelder: Körber, Christian, CH-8004 Zürich (CH)
(72) Erfinder: Körber, Christian, CH-8004 Zürich (CH)
(74) Vertreter: Patentanwälte Schaad, Balass, Menzl & Partner AG

(57) **Zusammenfassung**

Es wird eine Vorrichtung (1) zur stereoskopischen Betrachtung von ein Stereobildpaar bildenden Stereobildern (10, 11) beschrieben, mit zwei zueinander in einem überstumpfen Winkel (α) angeordneten Spiegelträgern (4, 5) und mit zwei je einem Spiegelträger zugeordneten Bildträgern (8, 9), die dazu bestimmt sind, je eines der Stereobilder zu tragen. Die Spiegelträger (4, 5) sind um eine gemeinsame Drehachse (12) drehbar miteinander verbunden und die Bildträger (8, 9) sind je um wenigstens eine weitere Drehachse (13, 15; 14, 16) drehbar an den zugehörigen Spiegelträger (4, 5) angelenkt.

## Beschreibung

Die Erfindung betrifft eine Vorrichtung zur stereoskopischen Betrachtung von ein Stereobildpaar bildenden Stereobildern nach dem Oberbegriff des Patentanspruchs 1.

Eine solche Vorrichtung ist schon seit langem als 1838 von Sir Charles Wheatstone erfundenes Original-Stereoskop bekannt. Dieses besteht aus einer Unterlage, auf welcher eine Spiegelanordnung mit zwei stehenden, in der Horizontalebene gesehen einen überstumpfen Winkel zueinander bildenden Spiegel in der Mitte befestigt ist. Zwei einen schiefen Winkel zur Längsrichtung bildende Stellwände sind beidseits der Spiegelanordnung mittels einer Spindel beweglich vorgesehen. Die Winkelgeometrie dieser Vorrichtung ist fest vorgegeben, so dass der Betrachter sich an der richtigen Stelle bezüglich der Spiegelanordnung befinden muss, um die beiden auf die Stellwände befindlichen Stereobilder mit den beiden Augen zur Deckung zu bringen, und so zu einem Raumbild zu gelangen. Dieses Prinzip wurde unter anderem vom spanischen Maler Salvador Dalí aufgegriffen und weiter entwickelt, beispielsweise mit den zwei Stereobildern "Der Stuhl" von 1976, wie dies im einzelnen im Buch "Stereogram" von Seiji Horibuchi, Cadence Books (1994) beschrieben und dargestellt ist. Die Stereoskopie nach Wheatstone ist aber ausschliesslich in einer fest installierten Anordnung einsetzbar, so dass solche Stereoskope nur für Laboratorien, Museen oder dergleichen geeignet sind. Für den täglichen Gebrauch sind diese jedoch praktisch nicht anwendbar.

Der Erfindung liegt nun die Aufgabe zugrunde, eine Vorrichtung zur stereoskopischen Betrachtung anzugeben, die eine einfache und praktische Handhabung ermöglicht und leicht transportierbar ist.

Diese Aufgabe wird durch eine Vorrichtung mit den Merkmalen des Patentanspruchs 1 gelöst.

Die Erfindung hat den Vorteil, dass eine leicht transportierbare und leicht handhabbare Vorrichtung erhalten wird, die für jeden Betrachter unmittelbar ein beliebiges Raumbild erzeugt, das scharf in seinen Konturen ist und beliebige Farben aufweisen kann. Aus diesem Grund ist der Anwendungsbereich der erfindungsgemässen Vorrichtung sehr breitgefächert und reicht von Lehrmitteln, Fachbüchern und dergleichen für Medizin, Chemie und so weiter, über Landkarten oder Wanderkarten für die Landestopographie bis zu Kunstbildern und Glückwunschkarten, aber auch Werbeträgern.

Weitere Vorteile und Anwendungen der vorliegenden Erfindung ergeben sich aus den abhängigen Ansprüchen und aus der nachfolgenden Beschreibung. Dort wird die Erfindung anhand eines in der Zeichnung schematisch dargestellten Ausführungsbeispieles näher erläutert. Es zeigt:
- Fig. 1: eine sehr schematische Darstellung einer erfindungsgemässen stereoskopischen Vorrichtung,
- Fig. 2: einen schematischen Ablauf der Anwendung der stereoskopischen Vorrichtung,
- Fig. 3: eine erster Herstellungsschritt der stereoskopischen Vorrichtung im Bereich der Spiegelträger,
- Fig. 4: ein zweiter Herstellungsschritt, und
- Fig. 5: ein dritter Herstellungsschritt der erfindungsgemässen stereoskopischen Vorrichtung.

In den Figuren sind für dieselben Elemente jeweils dieselben Bezugszeichen verwendet und es gelten erstmalige Erklärungen zu einem bestimmten Element für alle Figuren, wenn nicht ausdrücklich anders erwähnt.

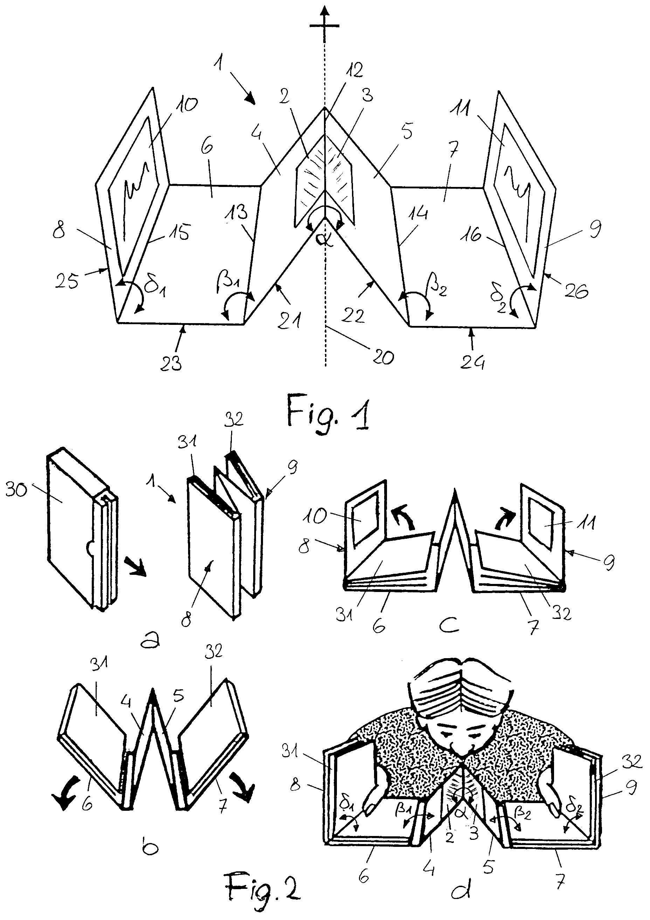

In Figur 1 ist perspektivisch und rein schematisch eine stereoskopische Vorrichtung 1 mit zwei je einen Spiegel 2 und 3 aufweisenden flächigen und ebenen Spiegelträgern 4 und 5, zwei flächigen Abstandselementen 6 und 7 und zwei flächigen und ebenen Bildträgern 8 und 9 dargestellt. Die Bildträger 8 und 9 weisen je ein Stereobild 10 und 11 eines Stereobildpaares auf. Die Spiegelträger 4 und 5 sind um eine als Faltkante 12 ausgebildete Drehachse in ihrem gegenseitigen überstumpfen Winkel α dreheinstellbar. Der vom Betrachter aus, d.h. in der Bildebene von hinten (vergleiche Figur 2d), gesehen rechte Spiegelträger 4 ist um eine als Faltkante 13 ausgebildete Drehachse in einem verstellbaren Winkel β₁ mit dem als rechte Abstandsplatte ausgebildeten Abstandselement 6 und der linke Spiegelträger 5 um eine als Faltkante 14 ausgebildete Drehachse in einem verstellbaren Winkel β₂ mit dem als linke Abstandsplatte ausgebildeten Abstandselement 7 gelenkig verbunden. Ebenso ist die rechte Abstandsplatte 6 um eine als Faltkante 15 ausgebildete Drehachse in einem verstellbaren Winkel δ₁ mit dem rechten Bildträger 8 und die linke Abstandsplatte 7 um eine als Faltkante 16 ausgebildete Drehachse in einem verstellbaren Winkel δ₂ mit der linken Bildträger 9 gelenkig verbunden. In der dargestellten Ausführung sind die Spiegelträger 4 und 5, die Abstandsplatten 6 und 7 und die Bildträger 8 und 9 rechteckig ausgebildet und ist die gesamte faltbare stereoskopische Vorrichtung 1 zu einer Ebene durch die Achse 20 symmetrisch ausgebildet. Die als Faltkanten ausgebildeten Drehachsen 12, 13, 14, 15 und 16 liegen demnach geradlinig und parallel zueinander in der jeweiligen Ebene der Spiegelträger 4 und 5, der flächigen Abstandselementen 6 und 7 und der ebenen Bildträger 8 und 9. Damit weisen die Seitenränder 21 und 22 der Spiegelträger 4 und 5 dieselbe Länge a auf, ebenso weisen die Seitenränder 23 und 24 der Abstandsplatten 6 und 7 dieselbe Länge b und die Seitenränder 25 und 26 der Bildträger 8 und 9 dieselbe Länge c auf. Versuche haben gezeigt, dass das Verhältnis der Längen a, b und c zur Gesamtlänge l (gleich der Summe der Längen a, b und c) vorteilhafterweise wie folgt ist:
- - Länge a 20%: bis 50% der Gesamtlänge l
- - Länge b 0: bis 50% der Gesamtlänge l
- - Länge c 30%: bis 50% der Gesamtlänge l

Die Funktionsweise der stereoskopischen Vorrichtung 1 wird nun anhand der Darstellung der Figur 2 erklärt:

Die Vorrichtung 1 wird aus einem Schuber oder Schutzumschlag 30 herausgenommen (Fig. 2a), aufgeklappt und auf eine flache Unterlage wie einen Tisch abgelegt (Fig. 2b). Sodann werden die Bildträger 8 und 9 aufgestellt (Fig. 2c) und der überstumpfe Winkel α zwischen den Spiegelträgern 4 und 5 und die Winkel δ₁ und δ₂ zwischen den Abstandsplatten 6 und 7 und den Bildträgern 8 und 9 so eingestellt, dass die Stereobilder 10 und 11 vom Betrachter deckungsgleich übereinander in den Spiegeln 2 und 3 gesehen werden. Der Betrachter schaut dabei mit dem rechten Auge ausschliesslich auf den rechten Spiegel 2 und mit dem linken Auge auf den linken Spiegel 3 (Fig. 2d). Um dies zu bewirken, sind die Spiegel 2 und 3 mit ihren Kanten anliegend an die Faltkante 12 angeordnet. Es ist somit keine besondere Schieltechnik erforderlich, wie sie beispielsweise für die bekannten "Autostereogramme" in der Form von ZufallspunktRaumbildern angewandt werden muss. Wie schon kurz angedeutet, sind die Stereobilder 10 und 11 aus einer jeweils anderen Perspektive aufgenommen, d.h. sie stellen einmal ein zweidimensionales Bild aus der Perspektive des rechten Auges und ein andermal ein zweidimensionales Bild aus der Perspektive des linken Auges dar. Diese beiden beim Betrachten übereinanderfallenden Bilder ergeben dann für den Betrachter ein Raumbild. Mögliche Parallaxen kann dieser mit seinen Händen (siehe Fig. 2d) ausgleichen, indem er die Winkel α, δ₁ und δ₂ ändert und somit auf sein eigenes Sehvermögen einstellt. In der Praxis wird der überstumpfe Winkel α bei etwa 270° liegen. Die Winkel δ₁ und δ₂ betragen üblicherweise etwa 90° und die Winkel β₁ und β₂ bei der gegebenen Anordnung etwa 135°.

Wie in den Figuren 2a bis 2d angedeutet, können die Bildträger 8 und 9 in Buchform als rechtes Buch 31 und als linkes Buch 32 ausgebildet sein. Es versteht sich, dass die Seiten dieser Bücher 31 und 32 aus relativ biegefestem Papier oder dergleichen hergestellt sein sollten, damit die Stereobilder 10 und 11 in einer ebenen Fläche verbleiben, und so optische Verzerrungen verhindert werden.

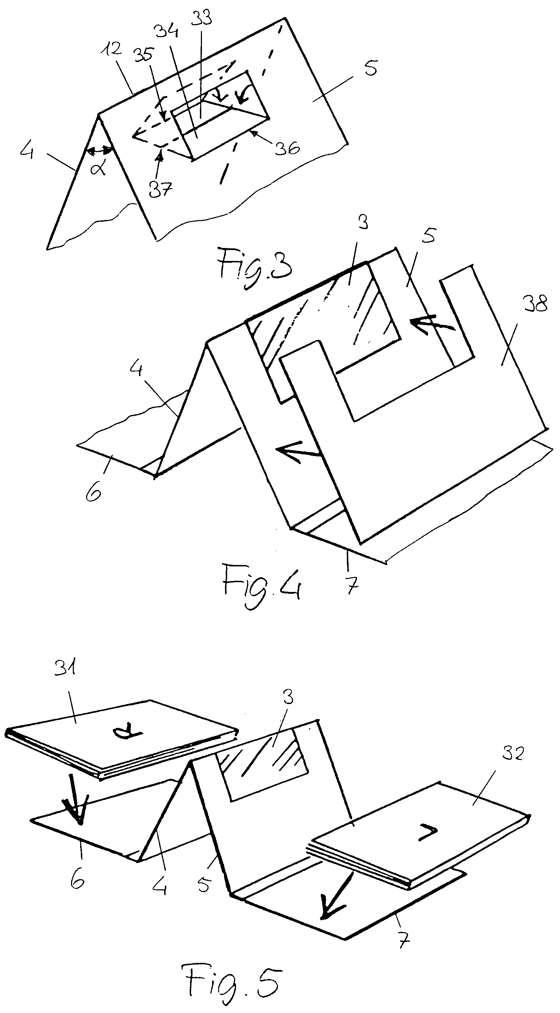

Die Figuren 3 bis 5 stellen verschiedene Schritte in der Herstellung einer oben beschriebenen stereoskopischen Vorrichtung 1 dar. In die in Figur 3 nur teilweise im Bereich der Faltkante 12 angedeuteten Spiegelträger 4 und 5 werden jeweils eine zungenartige Lasche 33 und 34 gestanzt und nach innen längs einer Faltkante 35 bzw. 36 gefalzt. Die freien Enden der Laschen 33 und 34 werden längs gefalzt, gegeneinander geklappt und durch Kleben aneinander befestigt. Sie bilden somit ein zusammenfaltbares Winkelbegrenzungselement 37, das den überstumpfen Winkel α auf etwa 270° begrenzt, d.h. die Längen der Laschen 33 und 34 sind so ausgebildet, dass im gestreckten Zustand der Winkel α gerade 270° beträgt. Über die so gebildeten Öffnungen werden die kleinen Spiegel 2 und 3 und eine Umrahmung 38 aus Karton oder dergleichen, welche die Spiegel 2 und 3 an seinen Rändern abzudeckt, auf die Spiegelträger 4 und 5 geklebt (siehe Figur 4). Die Spiegel 2 und 3 liegen mit ihren Rändern an der Faltkante 12 an und ihre Fläche beträgt etwa ein Drittel der gesamten Aussenfläche der Spiegelträger 4 und 5. Um verschiedene Raumbilder nacheinander zu betrachten, können anstelle des aus den Stereobilder 10 und 11 bestehenden Stereobildpaares, wie oben erwähnt, ein rechtes Buch 31 und ein linkes Buch 32 mit verschiedenen Stereobildern vorgesehen sein, die je mit einem Buchdeckel auf die jeweilige Abstandsplatte 6 oder 7 beispielsweise durch Kleben befestigt werden. Es kann aber auch eine lösbare Befestigung wie ein Klett- oder Druckknopfverschluss dazu verwendet werden, damit der Satz Bücher 31 und 32 gegen einen anderen Satz ausgetauscht werden kann.

Eine weitere Möglichkeit der Ausbildung der stereoskopischen Vorrichtung 1 besteht darin, dass die Bildträger 8 und 9 in einen Bildhalter mit einem seitlichen Schlitz hineinschiebbar sind, wobei der jeweilige Bildhalter drehbar mit dem betreffenden Abstandselement 6 oder 7 verbunden ist. Damit lassen sich ebenfalls mehrere Raumbilder auf einfacher Weise nacheinander betrachten. Anstatt Faltkanten 12, 13, 14, 15 und 16 können auch Scharniere oder Spiralbinder als Drehachsen vorgesehen sein, um den geeigneten Winkel einstellen zu können.

Die Spiegelträger 4 und 5 können, wie oben beschrieben, mit einem Spiegel 2 und 3 versehen sein, oder auch über ihre ganze Aussenfläche spiegelnd ausgebildet sein. Dazu eignen sich aufgedampfte Metallschichten oder auch geeignete Klebfolien beispielsweise aus Alumium, Chrom oder aus Legierungen dieser Metalle.

Die gesamte stereoskopische Vorrichtung 1 mit den Büchern 31 und 32 lässt sich einfach zusammenfalten und in den Schuber oder Schutzumschlag 30 hineinschieben, so dass ein sehr handliches und gut transportierbares Ganzes erhalten wird. Dadurch eignet sich die oben beschriebene stereoskopische Vorrichtung 1 ausgezeichnet als Demonstrationsmaterial für Ausbildungszwecke in der Medizin oder in der Chemie. Jedoch kann die Vorrichtung 1 auch mit grossem Vorteil von Architekten eingesetzt werden, um in verschiedenen von einem Computer berechneten und gezeichneten Raumbildern ein Bauprojekt vorstellen zu können. Eine andere Anwendung besteht in der räumlichen Darstellung von Zeichnungen oder Malereien mit einer besonders perspektivischen Wirkung, wie beispielsweise den Kunstwerken von M.C. Escher, Margritte, Salvador Dalí oder Roy Lichtenstein. Die stereoskopische Vorrichtung 1 ist jedoch auch als perspektivische Wanderkarte denkbar, wodurch die Höhenunterschiede und die Distanzen besser abschätzbar sind.

Als Werkstoff für die Spiegelträger 4 und 5, die Abstandsplatten 6 und 7 und die Bildträger 8 und 9 eignen sich insbesondere Halbkarton, Karton, Eisen oder Aluminiumblech oder auch ein biegefestes Kunststoffmaterial wie Plastikmaterial oder dergleichen. Die Buchdeckel der genannten Bücher 31 und 32 können aus einem ähnlichen Material hergestellt sein, wobei die Seiten beispielsweise aus gestrichenem Papier mit einem Flächengewicht von etwa 180 g/m² bestehen. Damit ist gewährleistet, dass die Stereobilder 10 und 11 beim Betrachten eines Raumbildes eben bleiben.

## Patentansprüche

1. Vorrichtung (1) zur stereoskopischen Betrachtung von ein Stereobildpaar bildenden Stereobildern (10, 11) mit zwei zueinander in einem überstumpfen Winkel (α) angeordneten Spiegelträgern (4, 5) und mit zwei je einem Spiegelträger zugeordneten Bildträgern (8, 9), die dazu bestimmt sind, je eines der Stereobilder zu tragen, dadurch gekennzeichnet, dass die Spiegelträger (4, 5) um eine gemeinsame Drehachse (12) drehbar miteinander verbunden und die Bildträger (8, 9) je um wenigstens eine weitere Drehachse (13, 15; 14, 16) drehbar mit dem zugehörigen Spiegelträger (4, 5) verbunden sind.

2. Vorrichtung nach Anspruch 1, dadurch gekennzeichnet, dass die Drehachsen (12, 13, 14, 15, 16) parallel sind.

3. Vorrichtung nach Anspruch 2, dadurch gekennzeichnet, dass die Spiegelträger (4, 5) und die Bildträger (8, 9) mittels Drehgelenke miteinander verbunden sind.

4. Vorrichtung nach Anspruch 3, dadurch gekennzeichnet, dass mindestens ein Drehgelenk (12, 13, 14, 15, 16) von einer Faltkante und/oder einem Scharnier gebildet ist.

5. Vorrichtung nach einem der Ansprüche 1 bis 4, dadurch gekennzeichnet, dass die Spiegelträger (4, 5) je über ein Abstandselement (6, 7) drehbar mit dem zugehörigen Bildträger (8, 9) verbunden sind.

6. Vorrichtung nach einem der Ansprüche 1 bis 5, dadurch gekennzeichnet, dass die Spiegelträger (4, 5) zusätzlich durch ein vorzugsweise zusammenfaltbares Winkelbegrenzungselement (37) miteinander verbunden sind.

7. Vorrichtung nach einem der Ansprüche 1 bis 6, dadurch gekennzeichnet, dass mehrere Bildträger (31, 32) in Buchform gebunden sind, um mehrere Stereobilder zu tragen.

8. Vorrichtung nach einem der Ansprüche 1 bis 7, dadurch gekennzeichnet, dass mit den Spiegelträgern (4, 5) je ein Bildhalter drehbar verbunden ist, der dazu bestimmt ist, die Bildträger (8, 9) auswechselbar aufzunehmen.

9. Vorrichtung nach einem der Ansprüche 1 bis 8, dadurch gekennzeichnet, dass die Bildträger (8, 9; 31, 32) und/oder die Spiegelträger (4, 5) flächig und eben sind, und aus biegefestem Papier, Halbkarton, Karton, Blech oder einem biegefestem Kunststoffmaterial hergestellt sind.

10. Vorrichtung nach Anspruch 9, dadurch gekennzeichnet, dass die Spiegelträger (4, 5) nur teilweise mit einem flachen und ebenen Spiegel (2, 3) versehen sind.

11. Vorrichtung (1) zur stereoskopischen Betrachtung von ein Stereobildpaar bildenden Stereobildern (10, 11) ausgebildet nach einem der Ansprüche 1 bis 10, um zickzackartig zusammengefaltet zu werden, und Schutzumschlag (30) zur Aufnahme einer solchen zusammengefalteten Vorrichtung (1).
